# EUROPEAN PATENT APPLICATION

(11) **EP 1 612 463 A1**
(43) Date of publication of application: **04.01.2006**
(21) Application number: 05014002.9
(22) Date of filing: 29.06.2005
(51) Int. Cl.: F16K 24/04, B60K 15/00

(54) **Rapid response fuel tank rollover/vent valve**

(30) Priority: 02.07.2004 US 884023
(71) Applicant: Eaton Corporation, Cleveland, Ohio 44114-2584 (US)
(72) Inventor: Zorine, Maxim V., Ann Arbor Michigan 48105 (US); Lamiman, Bradford R., Ann Arbor Michigan 48104 (US)
(74) Representative: Rüger, Barthelt & Abel Patentanwälte

(57) **Abstract**

A float operated vapor vent/rollover valve for a fuel tank has a converging section (44) formed in the the liquid inlet (46) to the valve which, in response to surges or waves in the fuel, creates a liquid jet impinging on the bottom of the float (38) causing rapid closing of the valve and preventing liquid fuel from entering the vapor vent lines to the vapor storage device.

## Description

### BACKGROUND OF THE INVENTION

The present invention relates to vapor vent valves of the type employed with a motor vehicle fuel tank for controlling vapor flow during refueling and vapor emissions during vehicle operation. In particular, the invention relates to fuel tank vapor vent valves of the type employing a float for controlling vapor venting from the tank during refueling and preventing liquid spillage into the vapor emission control system in event of vehicle rollover.

In normal vehicle operation the fuel is subjected to a complex surface wave pattern due to vehicle motion and these rapidly moving waves have created problems as they contact the float operated vent valve. Upon such a wave contacting the float operated valve, the inertia of the float may prevent the float from rising or responding rapidly enough to close the valve and prevent liquid fuel from escaping into the conduits connected externally to the vapor vent valve. Under severe vehicle motion, such rapidly formed waves in the fuel can cause liquid to enter the vapor lines and in certain circumstances the vapor storage device, such as a charcoal canister, connected to the vapor vent lines. The presence of liquid fuel in the vapor vent lines or the canister can result in malfunction of the vapor emission control system.

Therefore, it has been desired to provide a way or means of alleviating the effects of rapid wave patterns in the fuel in a tank on a float-operated rollover/vent valve and to prevent passage of liquid fuel through the valve. It has further been desired to provide such protection from rapidly formed waves in the liquid fuel in the tank in a manner that does not require complete redesign of the fuel vapor vent valves currently employed and thus eliminate the need for costly retooling for manufacturing such valves.

### BRIEF SUMMARY OF THE INVENTION

The present invention provides a float operated rollover and vapor vent valve for a vehicle fuel tank which employs a converging section in the liquid fuel inlet of the valve such that rapidly moving waves in the liquid fuel in the tank create a jet which impinges on the undersurface of the float thereby increasing the response of the float to the wave in the tank and preventing liquid fuel from escaping through the valve. The converging section in the inlet may be formed by modifying only portions of an existing valve and thereby eliminates the need of costly retooling of the entire valve.

### BRIEF DESCRIPTION OF THE DRAWINGS

FIG. 1 is a cross-section of a first embodiment of a fuel vapor vent/rollover valve employing the present invention; and,

FIG. 2 is a view similar to FIG. 1 of an alternative embodiment of the present invention.

### DETAILED DESCRIPTION OF THE INVENTION

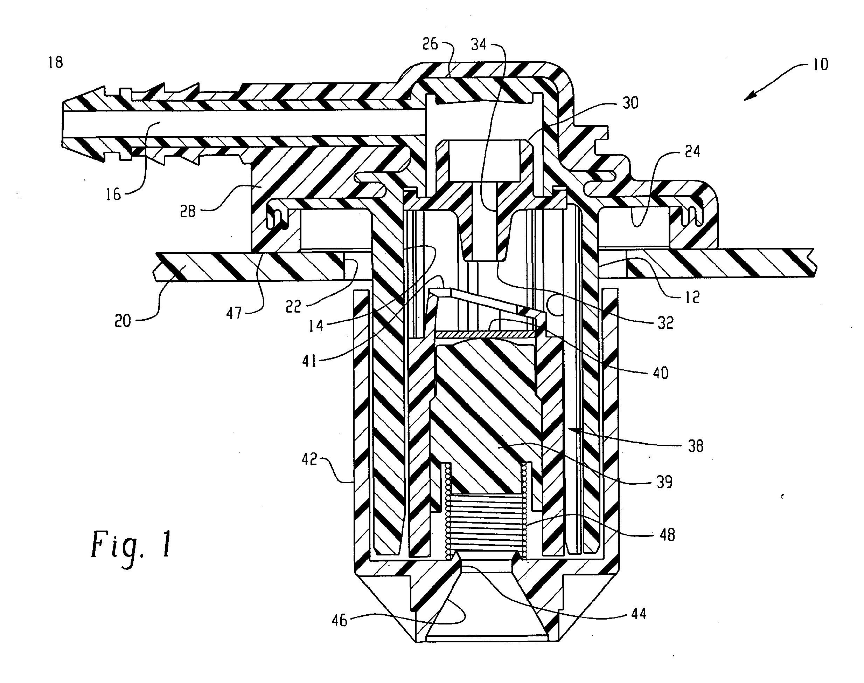

Referring to FIG. 1, the present invention is embodied in a valve assembly indicated generally at 10 having a valve body 12 formed of material impervious to the fuel as, for example, polyamide material partially filled with glass particles. The valve body includes a hollow float chamber 14, a vapor vent passage 16 formed in a fitting 18 which is intended to extend exteriorly of a fuel tank, portions of the wall of which are indicated by reference numeral 20. A valve body 12 has the lower portion thereof forming the valving chamber 14 extending downwardly through an access opening 22 formed in the upper wall of the fuel tank. The body 12 has an outwardly extending flange 24 which, along with fitting 18, the upper portion 26 of the body is overmolded with material compatible with weldment to the tank material as denoted by reference numeral 28 as, for example, high density polyethylene material (HDPE).

An insert 30 is disposed in the valving chamber 14 and is secured therein by any suitable expedient, as for example, by weldment and has formed thereon an annular valve seat 32 with a vent passage 34 formed therein which communicates through upper portion 26 with the passage 16 in hose fitting 18.

A float assembly indicated generally at 38 is received in the valving chamber 14 and is moveable therein in response to fuel level in the tank. The float assembly includes a float 39 with resilient flexible valve member 40 disposed on the upper end of the float which closes valve seat 32 upon the float rising in response to the fuel level in the tank reaching a predetermined level. Valve member 40 is retained with the float by a cage 41. The float assembly 38 is retained in the valving chamber by a cup-shaped member 42 which is attached over the lower portion 12 of the valve body; and, the member 42 has an inlet passage 44 formed in the lower or closed end thereof which has a converging section 46 formed on the upstream end of passage 44. The float is biased in an upward direction by a calibration spring 46 having one end registered against the closed end of the member 42 and the opposite end registered against the lower end of the float assembly 38.

The converging section 46 of the inlet passage 44 functions to increase the velocity of the liquid fuel impinging on the inlet 46 due to sudden wave action in the fuel thereby producing a jet of fuel which impinges on the lower end of the float assembly 38 and raises the float rapidly to close valve member 40 against the valve seat 32.

It will be understood that the overmold material 28 over the periphery of the flange 24 extends axially downwardly over the periphery of flange 24 to provide an attachment surface 47 which may then be attached to the fuel tank as, for example, by weldment, such as by spin welding or sonic welding.

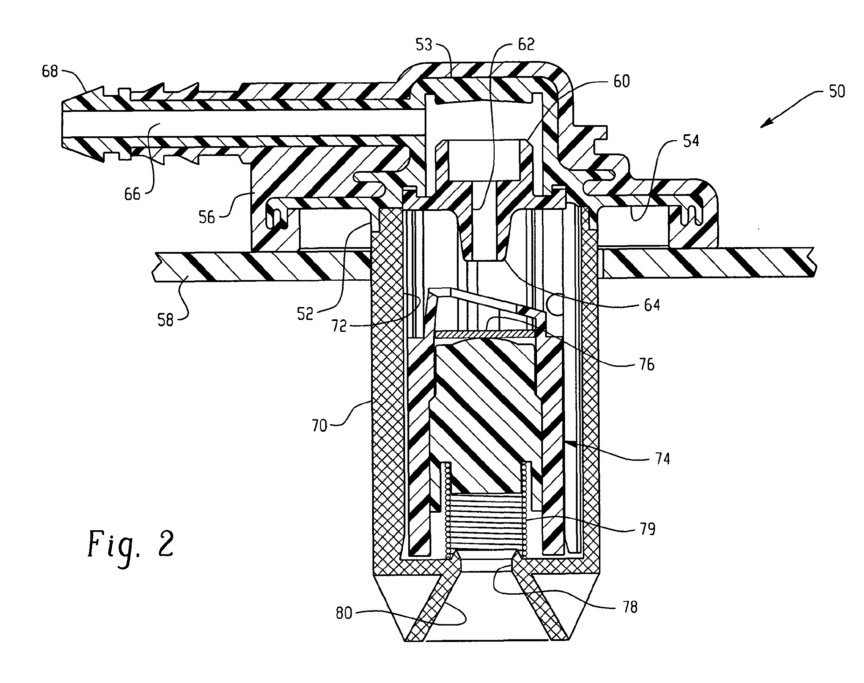

Referring to FIG. 2, an alternate embodiment invention is shown in the valve assembly indicated generally at 50 which has the valve body 52 truncated adjacent the outwardly extending flange 54 which is overmolded by material 56 and which is secured to the wall 58 of a fuel tank by suitable weldment in a manner similar to that of the embodiment of FIG. 1.

Valve body 52 has an insert 60 disposed therein with a vapor vent passage 62 formed therethrough and having a valve seat 64 formed on the lower end thereof. Vent passage 62 communicates through upper portion 53 of the valve body with a vent outlet passage 66 formed in a hose fitting 68 in a configuration similar to that of the embodiment of FIG. 1.

A cup-shaped member 70 has the upper rim thereof attached to the undersurface of flange 54 by any suitable expedient; however, in the presently preferred practice of the invention the cup-shaped member 70 is attached thereto by weldment. The cup-shaped member 70 forms a float chamber 72 into which is slidably received and guided for movement therein a float assembly indicated generally at 74 which includes a flexible valve member 76 retained on the upper end of the float assembly. It will be understood that upon rising fuel level in the tank float assembly 74 moves upwardly causing the valve member 76 to close against valve seat 64 and preventing vapor or liquid fuel entering the vent passage 62.

The lower or closed end of the cup-shaped member 70 retains the float assembly 74 in the chamber 72. A spring 78 has one end thereof registered against the inside of the closed end of the cup-shaped member 70 with the opposite or upper end registered against the lower end of the float assembly 74 thereby biasing the float in an upward direction for calibration of the valve 76 for closing at the proper desired liquid level of fuel in the tank.

The lower end of the cup-shaped member 70 has a liquid fuel inlet passage 78 formed therein which has on the upstream or inlet end thereof a converging section 80 which functions to increase the velocity of the fuel entering passage 78 upon experiencing a sudden wave in the fuel. The increased velocity of the fuel passing through passage 78 creates a jet which impinges on the undersurface of float assembly 74 and causes the assembly 74 to rise rapidly closing valve 76 against valve seat 64.

The present invention thus provides a simple and low cost way of modifying a vapor vent valve to provide a fluid jet at the inlet in response to wave surges in the liquid fuel so as to impinge on the undersurface of the float valve to cause rapid closing thereof and thereby prevent liquid fuel from entering the vapor emission conduits and vapor storage canister.

Although the invention has hereinabove been described with respect to the illustrated embodiments, it will be understood that the invention is capable of modification and variation and is limited only by the following claims.

## Claims

1. A method of making a float operated valve comprising:
(a) forming a valving chamber (14) with a vent opening (34, 16) in a valve body (12) and disposing a float *37( in the chamber for movement with respect to said opening; and,
(b) forming a liquid inlet (46)with a converging section (44) and upon sudden movement of the liquid in the tank into said inlet creating a jet of liquid and impinging the jet on a surface of said float and moving the float to close the vent opening.

2. The method defined in claim 1, wherein said step of forming an inlet includes forming a conically tapered section (46).

3. The method defined in claim 1, wherein said step of disposing a float includes disposing said float, said vent opening and said inlet in vertical alignment.

4. The method defined in claim 1, wherein said step of disposing a float includes attaching a cup-shaped member (42) over the body (12) and retaining the float in said chamber.

5. A float operated valve comprising:
(a) a body (12) defining a valving chamber (14) having a vent outlet (34, 16) and liquid inlet (44);
(b) a float (38) disposed in said valving chamber and moveable upon the rising level of liquid entering said inlet for closing said vent outlet; and,
(c) said inlet includes a converging flow section (46) operative upon sudden liquid movement into said liquid inlet to produce a jet impinging on the float for effecting said movement.

6. The valve defined in claim 5, wherein said converging flow section (46) is conically tapered.

7. The valve defined in claim 5, wherein said float, said vent outlet and said inlet are vertically aligned.

8. The valve defined in claim 5, wherein said body includes a cup-shaped member attached thereto for retaining said float, with said converging inlet formed in said cup-shaped member (42).
